Europäisches Patentamt

European Patent Office

Office européen des brevets

(19)

(11) Veröffentlichungsnummer: **0 177 774**
**B1**

(12) **EUROPÄISCHE PATENTSCHRIFT**

(45) Veröffentlichungstag der Patentschrift:
10.01.90

(51) Int. Cl.⁴: **F 26 B 13/10**

(21) Anmeldenummer: 85111324.1

(22) Anmeldetag: 07.09.85

(54) Trockenvorrichtung für bahnförmige Materialien.

(30) Priorität: 10.09.84 DE 3433224

(43) Veröffentlichungstag der Anmeldung:
16.04.86 Patentblatt 86/16

(45) Bekanntmachung des Hinweises auf die Patenterteilung:
10.01.90 Patentblatt 90/2

(84) Benannte Vertragsstaaten:
AT BE CH DE FR GB IT LI LU NL SE

(56) Entgegenhaltungen:
EP-A- 0 053 269
WO-A-80/00183
WO-A-84/01021
DE-A- 3 012 880
DE-C- 753 932
FR-A- 2 522 530
GB-A- 1 027 732
GB-A- 2 115 128
US-A- 2 733 520
US-A- 2 804 694
US-A- 3 084 448

(73) Patentinhaber: LOHMANN GmbH & CO KG, Irlicher Strasse 55, D-5450 Neuwied 12 (DE)

(72) Erfinder: Barth, Peter, Dr.rer.nat.,
Johann-Gottfried-Herder-Strasse 6,
D-5450 Neuwied 12 (DE)

(74) Vertreter: Reitzner, Bruno, Dr. et al, Patentanwälte
Dipl.-Ing. R. Splanemann Dr. B. Reitzner Tal 13,
D-8000 München 2 (DE)

## Beschreibung

Die Erfindung betrifft eine Trockenvorrichtung für bahnförmige Materialien, enthaltend eine Trockenkammer, durch die das zu trocknende bahnförmige Material freitragend geführt und mit strömendem Trockengas in Berührung gebracht wird, einen um die Trockenkammer angeordneten Mantel, dessen Innenwände zusammen mit den Außenwänden der Trockenkammer einen Zwischenraum begrenzen, wobei das durch eine Zuleitung in den Zwischenraum eingeführte kalte Trockengas nach dem Aufheizen in einem nach dem Zwischenraum angeordneten Erhitzer unter Aufrechterhaltung eines mit Hilfe einer Saugpumpe erzeugten Druckgefälles die Trockenkammer im Gegenstrom zu dem Strom im Zwischenraum durchströmt und diese unter Abgabe mindestens eines Teils der aufgenommenen Wärme an das Trockengas im Zwischenraum durch eine Ableitung verläßt.

Derartige Trockenvorrichtungen sind beispielsweise aus der FR-A-2522530 bekannt. Der Trockenraum ist jedoch nicht gesamtumfänglich durch Zwischenräume ummantelt, sondern nur oben und unten. Außerdem ist der Raum, durch den das mit dem flüchtigen Bestandteil und Verunreinigungen beladene warme Trockengas fließt, nicht leicht zugänglich. Die Trennwand zwischen dem Trockenraum und dem Zwischenraum ist gewellt, so daß sich in den Ecken Verunreinigungen abscheiden können, die nicht leicht entfernt werden können. Ferner befinden sich im Trockenraum komplizierte Einbauten mit Kanälen, die nicht leicht gereinigt werden können, da die Außenwand der Trockenkammer nicht teilbar ist und die Kanäle schwer zugänglich sind. Außerdem wird mit Hilfe eines Gebläses im Behandlungsraum ein Überdruck gegenüber der äußeren Atmosphäre erzeugt, so daß Lösungsmitteldämpfe nach außen dringen können. Eine ähnliche Trockenvorrichtung betrifft die GB-A-2115128, bei der jedoch kein Wärmeaustausch zwischen dem Trockengas und mit dem mit Lösungsmitteldämpfen beladenen Abgas stattfindet.

Bei der Herstellung von bahnförmigen Beschichtungsprodukten, die mit Arzneimitteln imprägniert sind (transdermale therapeutische Systeme; TTS) treten Trocknungsprobleme auf, für deren Bewältigung bekannte Konstruktionen von Trockenvorrichtungen nur beschränkt geeignet sind.

In den letzten Jahrzehnten war man bestrebt, auf kürzestmöglicher Baulänge mit feinstmöglicher Steuerung den höchstmöglichen Trocknungseffekt zu erzielen. Dies wird in der Regel durch Kreislaufführung von Teilströmen des Trockengases innerhalb der Trocknerabschnitte erreicht. Ein damit verbundener großer Nachteil besteht darin, daß die Innenflächen der Trockenvorrichtung, die mit den aus dem zu trocknenden, bahnförmigen Material austretenden Substanzen, d.h. also auch mit Arzneimitteln in Berührung kommen, ungewöhnlich kompliziert sind und zahlreiche, der Reinigung nicht mehr zugängliche Hinterschneidungen, tote Räume und sogar fast geschlossene Hohlräume (Rohrführungen, Ventilatoren, Düsen usw.) besitzen. Eine effektive Reinigung der Trockenvorrichtung ist insbesondere dann erforderlich, wenn diese für die aufeinanderfolgende Trocknung von bahnförmigen Materialien, die mit unterschiedlichen Arzneimitteln belegt sind, verwendet werden soll. Eine Kontaminierung eines solchen Materials mit Arzneimittelrückständen aus einer vorausgegangenen Trockencharge ist nicht vertretbar, insbesondere, wenn die Arzneimittel entgegengesetzte Wirkungsspektren haben. Wenn kleinere Chargen von bahnförmigen Materialien mit Spezialarzneimitteln, für die nur ein beschränkter Bedarf besteht, getrocknet werden sollen, ist es wichtig, die Reinigung in kurzer Zeit vorzunehmen, um Leerlaufzeiten zu vermeiden. Ferner dürfen Arzneimittelrückstände aus Gründen der Arbeitsplatzhygiene nicht in die äußere Atmosphäre gelangen. Schließlich dürfen die zu trocknenden bahnförmigen Materialien nicht durch von außen kommende Verunreinigungen (z.B. durch Staubteilchen und Bakterien) verunreinigt werden.

Der Erfindung liegt die Aufgabe zugrunde, eine Trockenvorrichtung der eingangs definierten Gattung zur Verfügung zu stellen, die eine schnelle und wirksame Trocknung des bahnförmigen Materials ohne Kontaminierung durch Rückstände aus vorausgegangenen Chargen und/oder durch Verunreinigungen aus der äußeren Atmosphäre ermöglicht und ein Entweichen der aus dem bahnförmigen Material austretenden Substanzen in die äußere Atmosphäre vermeidet.

Diese Aufgabe wird erfindungsgemäss dadurch gelöst, daß

a) die Trockenkammer aus leicht lösbar miteinander verbundenen, schalenförmigen, an den Ecken abgerundeten bzw. gebrochenen Wandelementen mit glatten Innenflächen zusammengesetzt ist;

b) der Zwischenraum die Trockenkammer gesamtumfänglich umgibt; und

c) die Saugpumpe in der Ableitung angeordnet ist, wodurch ein Druckgefälle zwischen dem Zwischenraum und der Trockenkammer einerseits und zwischen der äußeren Atmosphäre und der Trockenkammer andererseits erzeugt wird.

Die schalenförmigen abgerundeten Wandelemente ermöglichen eine schnelle Demontage der Vorrichtung zum Zwecke der Reinigung. Unter «abgerundet» versteht man, daß die Innenflächen der schalenförmigen Wandelemente in einem nicht zu kleinen (z.B. spitzen oder rechten) Winkel aufeinanderstoßen; «abgerundet» sind die schalenförmigen Wandelemente z.B. auch dann, wenn die Kanten gebrochen sind. Nach der Reinigung kann die Vorrichtung sehr schnell wieder zusammengebaut werden. Die schalenförmigen Wandelemente haben glatte Innenflächen, d.h. keine Vorsprünge, Vertiefungen und scharfe Kanten und Ecken. Sie können beispielsweise mit Hilfe von Klammern miteinander verbunden werden, die leicht wieder gelöst werden können. Ferner können die schalenförmigen Wandelemente einfach ineinandergesteckt oder aufeinandergelegt werden, wobei es aus den nachstehend angegebenen Gründen nicht unbedingt notwendig ist, daß die Verbindungsstellen absolut dicht sind.

Die Trockenkammer ist von einem Mantel umgeben, so daß ein Zwischenraum gebildet wird, durch den das Trockengas eingeführt wird. Nach dem Passieren eines Erhitzers strömt das erhitzte Trockengas in den Trockenraum, wobei zwischen dem Zwischenraum, der Trockenkammer und der äußeren Atmosphäre ein Druckgefälle aufrechterhalten wird, d.h. die Vorrichtung steht unter einem leichten Unterdruck, so daß aus der äußeren Atmosphäre immer etwas Luft einströmen kann, da die Eintritts- und Austrittsöffnung, durch die das bahnförmige Material durch die Trockenkammer geleitet wird, nicht abgedichtet werden kann.

Dadurch, daß der Druck des Trockengases im Zwischenraum etwas höher ist als in der Trockenkammer, kann immer etwas Gas durch die Verbindungsstellen in die Trockenkammer strömen, d.h. es kann kein verunreinigtes Gas aus der Trockenkammer in den Zwischenraum gelangen. Auf diese Weise brauchen nur die Innenflächen der schalenförmigen Wandelemente der Trockenkammer gereinigt zu werden.

Durch den Zwischenraum strömt kaltes Trockengas, wodurch die Außenwände des Mantels verhältnismäßig kühl bleiben. Es entstehen also keine Wartezeiten, wenn die Vorrichtung zur Reinigung auseinander genommen werden soll. Außerdem braucht kein Wärmeisoliermaterial verwendet zu werden, das bei der Reinigung der Vorrichtung zu Problemen führen würde. Dadurch, daß das Trockengas in der Trockenkammer einen Teil der aufgenommenen Wärme an das kalte Trockengas im Zwischenraum abgibt, wird die Wärmebilanz des Verfahrens verbessert.

Die schalenförmigen Wandelemente der Trockenkammer können beim Auseinandernehmen bzw. beim Zusammenbau an sich von der Stirnseite her in den tunnelförmigen Mantel hineingeschoben werden. Vorzugsweise ist aber auch der Mantel aus leicht lösbar miteinander verbundenen schalenförmigen Wandelementen zusammengesetzt, so daß das Auseinandernehmen und der Zusammenbau der Vorrichtung schneller vonstatten gehen können. Diese Wandelemente sind vorzugsweise ebenfalls «abgerundet» (im Sinne der vorstehend angegebenen Definition), obwohl dies hier nicht unbedingt notwendig ist, da der Mantel nicht so stark verunreinigt wird, wie die Trockenkammer.

Wie bereits erwähnt, ist es wegen des Druckgefälles zwischen dem Zwischenraum und der Trockenkammer an sich nicht erforderlich, daß die Verbindungsstellen abgedichtet werden. Zur Verbesserung der Abdichtung sind jedoch die schalenförmigen Wandelemente der Trockenkammer und gegebenenfalls auch des Mantels über Dichtungselemente miteinander verbunden. Diese Dichtungselemente bestehen aus einem nicht porösen und reinigungsfähigen Material, da sich in einem porösen Material, wie Schaumstoff, Verunreinigungen festsetzen könnten, die nur schwer wieder zu entfernen sind.

Die Verbindung kann auch darin bestehen, daß sie Kanten der schalenförmigen Wandelemente Metall gegen Metall anliegen, wobei die Kanten eines Wandelementes auch geometrisch rund gestaltet sein können und in entsprechend geformte Rinnen des anderen Wandelements eingesetzt werden können.

Zur Verbesserung des Wärmeaustausches zwischen der Trockenkammer und dem Zwischenraum bestehen die schalenförmigen Wandelemente der Trockenkammer vorzugsweise aus einem Material mit hoher Wärmeleitfähigkeit, zum Beispiel aus Edelstahl. Dieses Material kann auch leicht gereinigt werden.

Um eine Kontamination des zu trocknenden bahnförmigen Materials durch Verunreinigungen aus der äusseren Atmosphäre (z.B. durch Staubteilchen und Bakterien) zu verhindern, ist vor der Zuleitung des Trockengases vorzugsweise ein Filter vorgesehen.

Die aus dem zu trocknenden Material austretenden Substanzen, wie Lösungsmittel und Arzneimittelrückstände, sind brennbar. Um zu verhindern, daß diese Substanzen in die äußere Atmosphäre gelangen können, ist nach der Ableitung des Trockengases aus der Trockenkammer vorzugsweise ein Nachverbrenner vorgesehen.

Um das Auseinandernehmen und den Zusammenbau der Vorrichtung zu erleichtern, ist die Trockenkammer und gegebenenfalls auch der Mantel in Abschnitte unterteilt, wobei die Länge der schalenförmigen Wandelemente der Länge der einzelnen Abschnitte entspricht. Zwischen den Abschnitten der Trockenkammer sind vorzugsweise Schottwände mit Durchlässen für das bahnförmige Material und für das Trockengas vorgesehen. Auf diese Weise kann das Trockengas in den einzelnen Abschnitten in getrennten Kreisläufen geführt und verwirbelt werden, wodurch der Trocknungseffekt verbessert wird. Zu diesem Zweck sind in der Trockenkammer vorzugsweise auch Hochdruckdüsen zum Einleiten eines zusätzlichen Trockengasstromes mit hoher Geschwindigkeit vorgesehen, die auf das zu trocknende bahnförmige Material gerichtet sind. Dieser zusätzliche Trockengasstrom macht nur einen kleinen Teil des gesamten Trockengasstromes aus, reicht aber aufgrund seiner hohen Geschwindigkeit aus, um das Trockengas zu verwirbeln. Diese Düsen sind so konstruiert, daß sie nur kleinste Luftvolumina durchlassen. Sie werden mit sehr hohem Druck beaufschlagt, so daß das Gas in den Düsen nahezu Schallgeschwindigkeit hat. Die Menge des zusätzlichen Trockengasstromes muß so gewählt werden, daß in der Trockenkammer kein Überdruck gegenüber der äußeren Atmosphäre entsteht, so daß kein verunreinigtes Trockengas aus der Vorrichtung austreten kann. Das jeweils eingedüste Trockengasvolumen läuft von Trocknerabschnitt zu Trocknerabschnitt im Gegenstrom über und wird zusammen mit dem Haupt-Trockengasstrom an der Produkt-Eingangsseite der Trockenvorrichtung abgesaugt und der Nachverbrennung zugeführt.

Die Hochdruckdüsen sind vorzugsweise als Schlitzdüsen ausgebildet, wobei die Schlitzlänge etwa der Breite des zu trocknenden bahnförmigen Materials entspricht. Da der zusätzliche Trockengasstrom mit sehr hoher Geschwindigkeit aus den Hochdruckdüsen austritt, bewirkt er auch einen Reinigungseffekt. Die Hochdruckdüsen haben zur Erleichterung der Reinigung glatte äußere Oberflächen. Die Befestigung der Hochdruckdüsen erfolgt im allgemeinen an einem in der Mitte der Trockenkammer verlaufenden Hochdruckrohr, das auch zur Speisung der Düsen mit komprimiertem Trockengas dient.

Die erfindungsgemäße Vorrichtung ist nachstehend anhand der Zeichnung erläutert.

Fig. 1 zeigt einen Längsschnitt durch die Vorrichtung;

Fig. 2 einen Querschnitt nach der Linie A–A von Fig. 1.

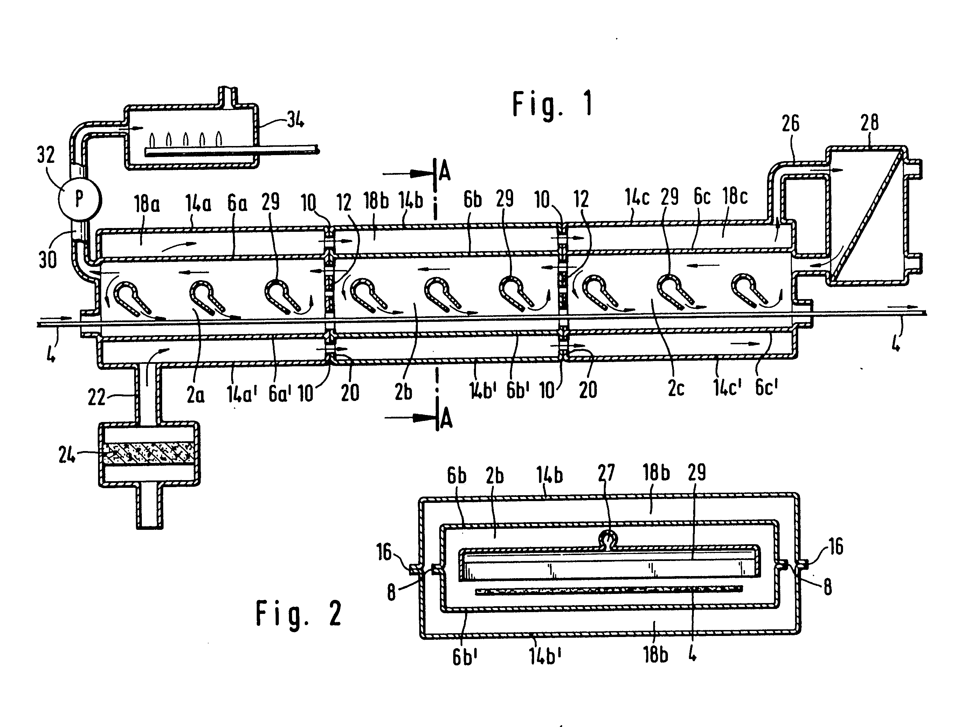

Das in den Fig. 1 und 2 dargestellte Ausführungsbeispiel enthält eine Trockenkammer 2, die in drei Abschnitte 2a, 2b und 2c unterteilt wird, durch die das zu trocknende bahnförmige Material 4 freitragend in Pfeilrichtung geführt wird.

Die Trockenkammer 2 hat, wie aus Fig. 2 ersichtlich ist, einen rechteckigen Querschnitt und ist aus schalenförmigen Wandelementen zusammengesetzt, deren Ecken zumindest auf der Innenseite abgerundet oder gebrochen sind, wobei die oberen Wandelemente mit 6a, 6b bzw. 6c und die unteren Wandelemente mit 6a', 6b' und 6c' bezeichnet sind. Die oberen und unteren Wandelemente stoßen an den Dichtflächen 8 aneinander, wobei eventuell auftretende Undichtigkeiten entweder durch genaue Bearbeitung der Dichtflächen oder vorzugsweise mit Hilfe von (nicht dargestellten) Dichtungselementen möglichst klein gehalten werden. Entsprechende Dichtflächen 10 sind auch an den mit Durchlässen für das bahnförmige Material versehenen Schottwänden 12 zwischen den Kammerabschnitten 2a und 2b einerseits und den Kammerabschnitten 2b und 2c andererseits vorgesehen. Auch zwischen diesen Abschnitten können Dichtungselemente vorgesehen sein, die wie die Dichtungselemente 8 aus einem nicht porösen, reinigungsfähigen Material bestehen müssen. Die äußeren Stirnflächen der Kammerabschnitte 2a und 2c sind mit Durchlässen für das bahnförmige Material versehen.

Um die Trockenkammer 2 ist ein Mantel 14 angeordnet, der durch die oberen und unteren schalenförmigen Wandelemente 14a, 14b und 14c bzw. 14a', 14b' und 14c' gebildet ist, deren Ecken vorzugsweise ebenfalls abgerundet bzw. gebrochen sind.

Diese Wandelemente sind leicht lösbar aneinander befestigt und stoßen an den Dichtflächen 16 (vgl. Fig. 2) zusammen. Ähnlich wie bei den Dichtflächen der Wandelemente 6 des Trockenraumes können auch hier Dichtelemente vorgesehen sein, die zweckmäßig ebenfalls aus einem nicht porösen, reinigungsfähigen Material bestehen, obwohl an diesen Stellen auch poröse Dichtelemente verwendet werden können, da die Wandelemente des Mantels nicht so häufig gereinigt zu werden brauchen.

Die Innenwände der Wandelemente 14a bis 14c bzw. 14a' bis 14c' des Mantels begrenzen zusammen mit den Außenwänden der Wandelemente 6a bis 6c bzw. 6a' bis 6c' der Trockenkammer einen Zwischenraum, der in die Abschnitte 18a, 18b und 18c unterteilt ist. Die Abschnitte 18a und 18b einerseits und die Abschnitte 18b und 18c andererseits sind durch Schottwände 20 voneinander getrennt, die mit Durchlässen für das Trockengas versehen sind. Zwischen den Schottwänden 20 können wiederum Dichtungselemente vorgesehen sein, die aber an diesen Stellen aus einem beliebigen (nicht unbedingt porenfreien) Material bestehen können.

Die äußeren Stirnflächen der Wandelemente 14a bzw. 14a' und 14c bzw. 14c' sind mit Durchlässen für das bahnförmige Material 4 versehen.

An dem Wandelement 14a' des Mantels ist eine Zuleitung 22 für kaltes Trockengas vorgesehen, das zuvor durch ein Filter 24 geleitet wurde, so daß es praktisch frei von Staubteilchen und Bakterien in die Vorrichtung eintritt. Das Gas durchströmt den in die Abschnitte 18a bis 18c unterteilten Zwischenraum zwischen der Trockenkammer und dem Mantel und erwärmt sich allmählich durch indirekten Wärmeaustausch mit dem im Gegenstrom durch die Trockenkammer strömenden, warmen Gas.

Auf diese Weise bleiben die Wandelemente 14 verhältnismäßig kühl (z.B. unter 30 °C). Dann strömt das Trockengas durch die Leitung 26 in den Wärmetauscher 28, wo es auf die erforderliche Trockentemperatur erwärmt wird. Aus dem Wärmetauscher 28 strömt das erwärmte Trockengas in die Abschnitte 2c, 2b und 2a der Trockenkammer, wo es sich mit den Lösungsmitteldämpfen bzw. den Verunreinigungen aus dem bahnförmigen Material 4 belädt und dieses trocknet.

In den Abschnitten 2a bis 2c der Trockenkammer sind an einem Hochdruckrohr 27, das in Längsrichtung durch die Trockenkammer verläuft, Hochdruckdüsen 29 befestigt, wodurch ein kleiner zusätzlicher Trockengasstrom mit nahezu Schallgeschwindigkeit auf das zu trocknende, bahnförmige Material 4 geblasen wird. Die Düsen 29 sind, wie aus Fig. 2 ersichtlich, als Schlitzdüsen ausgebildet, wobei die Schlitzlänge etwa der Breite des zu trocknenden bahnförmigen Materials 4 entspricht. Mit Hilfe der Düsen 29, die aus dem Hochdruckrohr 27 gespeist werden, wird in den Abschnitten 2a bis 2c durch Jet-Effekt jeweils ein Sekundärkreislauf des Trockengases angeregt, wodurch die Trockenleistung und die Beladung des Trockengases mit Lösungsmitteldämpfen verbessert werden.

Das mit den Lösungsmitteldämpfen beladene bzw. mit Arzneimitteln verunreinigte Trockengas tritt durch die in der äußeren Stirnwand des Abschnitts 2a der Trockenkammer vorgesehene Ableitung 30 aus und gelangt in eine Absaugpumpe 32, mit deren Hilfe ein Druckgefälle zwischen dem Zwischenraum 18 und der Trockenkammer 2 aufrechterhalten wird. Auf diese Weise wird vermieden, daß verunreinigtes Trockengas aus dem Trockenraum 2 in den Zwischenraum 18 bzw. in die Atmosphäre gelangt. Auf diese Weise entfällt die Notwendigkeit einer Reinigung der Außenfläche der Wandelemente 6a bis 6c bzw. 6a' bis 6c' und der Wandelemente 14a bis 14c bzw. 14a' bis 14c'.

Wichtig ist auch, daß der Austritt des verunreinigten Trockengases durch die Durchlässe für das bahnförmige Material 4 in die Atmosphäre vermieden wird.

Das verunreinigte Trockengas wird mit Hilfe der Saugpumpe 32 in den Nachverbrenner 34 gefördert, in welchem die Verunreinigungen bzw. die Lösungsmitteldämpfe verbrannt werden. Da als Trockengas üblicherweise Luft verwendet wird, braucht zur Verbrennung kein Sauerstoff zugesetzt zu werden. Bei Verwendung von Inertgasen ist dies jedoch erforderlich.

Man kann die im Trockengasstrom enthaltenen Verunreinigungen und Lösungsmitteldämpfe auch mit Hilfe von Filtern (wenn es sich um feste oder flüssige Schwebeteilchen handelt) oder durch Adsorption an Adsorptionsmitteln bzw. durch Kondensation (wenn es sich um gas- oder dampfförmige Substanzen handelt) aus dem Trockengasstrom entfernen. Auch Kombinationen dieser Reinigungsmethoden können angewendet werden. Beispielsweise kann es zweckmässig sein, die festen und flüssigen Schwebeteilchen auszufiltern, einen Teil der Lösungsmitteldämpfe fraktioniert auszukondensieren oder an einem Adsorptionsmittel zu adsorbieren (wenn es sich um wertvolle Lösungsmittel handelt) und die restlichen Lösungsmitteldämpfe zu verbrennen.

Will man die Trockenvorrichtung reinigen, was immer dann erforderlich ist, wenn ein bahnförmiges Material getrocknet werden muß, das ein anderes Arzneimittel enthält als die vorhergehende Charge, werden zunächst die Wandelemente 14a bis 14c bzw. 14a' bis 14c' des Mantels entfernt, indem die Verbindungselemente (z.B. Klemmen) zwischen den Wandelementen gelöst werden. Die Entfernung der Wandelemente 14 kann praktisch ohne Zeitverlust erfolgen, da diese relativ kühl sind. Dann werden die Wandelemente 6a bis 6c bzw. 6a' bis 6c' in der gleichen Weise entfernt. Es liegen nunmehr die Düsen 29 frei, die gereinigt werden können. Die Wandelemente 6 brauchen üblicherweise nur auf ihren Innenflächen gereinigt zu werden; eine Reinigung der Wandelemente 14 ist nicht in jedem Fall erforderlich.

Der Zusammenbau der Vorrichtung erfolgt in der umgekehrten Reihenfolge.

**Patentansprüche**

1. Trockenvorrichtung für bahnförmige Materialien, enthaltend eine Trockenkammer, durch die das zu trocknende bahnförmige Material freitragend geführt und mit strömendem Trockengas in Berührung gebracht wird, einem um die Trockenkammer angeordneten Mantel, dessen Innenwände zusammen mit den Außenwänden der Trockenkammer einen Zwischenraum begrenzen, wobei das durch eine Zuleitung in den Zwischenraum eingeführte kalte Trockengas nach dem Aufheizen in einem nach dem Zwischenraum angeordneten Erhitzer unter Aufrechterhaltung eines mit Hilfe einer Saugpumpe erzeugten Druckgefälles die Trockenkammer im Gegenstrom zu dem Strom im Zwischenraum durchströmt und diese unter Abgabe mindestens eines Teils der aufgenommenen Wärme an das Trockengas im Zwischenraum durch eine Ableitung verläßt, dadurch gekennzeichnet, daß

a) die Trockenkammer (2a bis 2c) aus leicht lösbar miteinander verbundenen, schalenförmigen, an den Ecken abgerundeten bzw. gebrochenen Wandelementen (6a bis 6c; 6a' bis 6c') mit glatten Innenflächen zusammengesetzt ist;

b) der Zwischenraum die Trockenkammer gesamtumfänglich umgibt; und

c) die Saugpumpe (32) in der Ableitung (30) angeordnet ist, wodurch ein Druckgefälle zwischen dem Zwischenraum (18) und der Trockenkammer einerseits und zwischen der äußeren Atmosphäre und der Trockenkammer andererseits erzeugt wird.

2. Vorrichtung nach Anspruch 1, dadurch gekennzeichnet, daß der Mantel (14) aus leicht lösbar miteinander verbundenen schalenförmigen Wandelementen (14a–14c; 14a'–14c') zusammengesetzt ist.

3. Vorrichtung nach Anspruch 1 oder 2, dadurch gekennzeichnet, daß die schalenförmigen Wandelemente der Trockenkammer (6a–6c; 6a'–6c') und gegebenenfalls auch die des Mantels (14a–14c; 14a'–14c') über Dichtungselemente aus einem nicht porösen und reinigungsfähigen Material miteinander verbunden sind.

4. Vorrichtung nach einem der Ansprüche 1 bis 3, dadurch gekennzeichnet, daß die schalenförmigen Wandelemente (6a–6c; 6a'–6c') der Trockenkammer aus einem Material hoher Wärmeleitfähigkeit bestehen.

5. Vorrichtung nach einem der Ansprüche 1 bis 4, dadurch gekennzeichnet, daß vor der Zuleitung (22) des Trockengases ein Filter (24) vorgesehen ist.

6. Vorrichtung nach einem der Ansprüche 1 bis 5, dadurch gekennzeichnet, daß nach der Ableitung (30) ein Nachverbrenner für die aus dem zu trocknenden Material austretenden brennbaren Substanzen vorgesehen ist.

7. Vorrichtung nach einem der Ansprüche 1 bis 6, dadurch gekennzeichnet, daß die Trockenkammer und gegebenenfalls auch der Mantel in Abschnitte (2a–2c; 18a–18c) unterteilt ist, wobei die Länge der schalenförmigen Wandelemente (6a–6c; 14a–14c) der Länge der einzelnen Abschnitte entspricht.

8. Vorrichtung nach Anspruch 7, dadurch gekennzeichnet, daß zwischen den Abschnitten (2a–2c) der Trockenkammer Schottwände (12) mit Durchlässen für das bahnförmige Material (4) und für das Trockengas vorgesehen sind.

9. Vorrichtung nach einem der Ansprüche 1 bis 8, dadurch gekennzeichnet, daß in der Trockenkammer (2) Hochdruckdüsen (29) zum Einleiten eines zusätzlichen Trockengasstromes mit hoher Geschwindigkeit vorgesehen sind, die auf das zu trocknende bahnförmige Material (4) gerichtet sind.

10. Vorrichtung nach Anspruch 9, dadurch gekennzeichnet, daß die Hochdruckdüsen (29) als Schlitzdüsen ausgebildet sind, wobei die Schlitzbreite etwa der Breite des zu trocknenden bahnförmigen Materials (4) entspricht.

## Claims

1. An apparatus for drying sheet-like materials, comprising a drying chamber, through which the sheet-like material to be dried passes in self-supporting manner and is brought into contact with a flow of drying gas, a casing which is disposed around the drying chamber and of which the inner walls, together with the outer walls of the drying chamber, define an intermediate chamber, wherein the cold drying gas introduced into the intermediate chamber through an inlet duct, after being heated in a heater disposed downstream of the intermediate chamber while maintaining a pressure drop generated by a suction pump, flows through the drying chamber in counterflow to the flow in the intermediate chamber and leaves said chamber through an outlet duct while transmitting at least part of the absorbed heat to the drying gas in the intermediate chamber, characterised in that

a) the drying chamber (2a to 2c) is composed of dish-shaped wall elements (6a to 6c; 6a' to 6c') connected to one another in an easily detachable manner, which elements are bevelled or rounded at the corners and which have smooth inner surfaces;

b) the intermediate chamber surrounds the drying chamber over its entire periphery, and

c) the suction pump (32) is disposed in the outlet duct (30), whereby a pressure drop is generated firstly between the intermediate chamber (18) and the drying chamber and secondly between the exterior atmosphere and the drying chamber.

2. An apparatus according to claim 1, characterised in that the casing (14) is composed of dish-shaped wall elements (14a to 14c; 14a' to 14c') connected to one another in an easily detachable manner.

3. An apparatus according to claim 1 or 2, characterised in that the dish-shaped wall elements of the drying chamber (6a to 6c; 6a' to 6c') and, optionally, the wall elements of the casing (14a to 14c; 14a' to 14c') are connected to one another via sealing elements of non-porous material which can be cleaned.

4. An apparatus according to any one of claims 1 to 3, characterised in that the dish-shaped wall elements (6a to 6c; 6a' to 6c') of the drying chamber are formed of a material having high thermal conductivity.

5. An apparatus according to any one of claims 1 to 4, characterised in that a filter (24) is provided upstream of the drying gas inlet duct (22).

6. An apparatus according to any one of claims 1 to 5, characterised in that downstream of the outlet duct (30) an after-burner is provided for the combustible substances emitted by the material being dried.

7. An apparatus according to any one of claims 1 to 6, characterised in that the drying chamber and, optionally, the casing is divided into sections (2a to 2c; 18a to 18c), wherein the length of the dish-shaped wall elements (6a to 6c; 14a' to 14c') corresponds to the length of the individual sections.

8. An apparatus according to claim 7, characterised in that bulkheads (12) with passages for the web-like material (4) and for the drying gas are provided between the sections (2a to 2c) of the drying chamber.

9. An apparatus according to any one of claims 1 to 8, characterised in that high-pressure nozzles (29) for introducing an additional flow of drying gas at high velocity are provided in the drying chamber (2) and are directed on to the web-like material (4) to be dried.

10. An apparatus according to claim 9, characterised in that the high-pressure nozzles (29) are in the form of slotted nozzles, the slot width corresponding approximately to the width of the web-like material (4) being dried.

## Revendications

1. Dispositif de séchage pour matières en forme de bande, comprenant une chambre de séchage à travers laquelle on fait passer la matière en forme de bande à sécher sans support intermédiaire et on la met en contact avec un gaz de séchage en circulation, une enveloppe disposée autour de la chambre de séchage, dont les parois internes délimitent un espace intermédiaire avec les parois externes de la chambre de séchage, et dans lequel le gaz de séchage froid introduit dans la chambre intermédiaire par une conduite d'arrivée traverse la chambre de séchage à contre-courant par rapport au courant circulant dans l'espace intermédiaire après avoir été chauffé dans un réchauffeur disposé en aval de l'espace intermédiaire et tout en conservant un gradient de pression produit à l'aide d'une pompe aspirante et quitte cette chambre de séchage par une conduite de sortie, en cédant au gaz de séchage qui circule dans l'espace intermédiaire au moins une partie de la chaleur qu'il a absorbée, caractérisé en ce que:

a) la chambre de séchage (2a à 2c) est composée d'éléments de parois (6a à 6c; 6a' à 6c') en forme de coquille à surface interne lisse, assemblés les uns aux autres par des liaisons facilement démontables, et qui sont arrondis ou abattus aux angles;

b) l'espace intermédiaire entoure la chambre de séchage sur tout son périmètre; et

c) la pompe aspirante (32) est agencée dans la conduite de sortie (30), de sorte qu'il s'établit un gradient de pression entre l'espace intermédiaire (18) et la chambre de séchage d'une part, et entre l'atmosphère extérieure et la chambre de séchage d'autre part.

2. Dispositif selon la revendication 1, caractérisé en ce que l'enveloppe (14) est composée d'éléments de paroi (14a à 14c; 14a' á 14c') en forme de coquille qui sont assemblés entre eux par des liaisons facilement démontables.

3. Dispositif selon l'une des revendications 1 ou 2, caractérisé en ce que les éléments de paroi en forme de coquille de la chambre de séchage (6a à 6c; 6a' à 6c') et éventuellement aussi ceux de l'enveloppe (14a à 14c; 14a' à 14c') sont reliés les uns aux autres par l'intermédiaire d'éléments d'étanchéité réalisés en une matière non poreuse et susceptible d'être nettoyée.

4. Dispositif selon l'une des revendications 1 à 3, caractérisé en ce que les éléments de paroi en forme de coquille (6a à 6c; 6a' à 6c') de la chambre de séchage sont réalisés en une matière à haute conductibilité thermique.

5. Dispositif selon l'une des revendications 1 à 4, caractérisé en ce qu'un filtre (24) est prévu en amont de la conduite d'arrivée (22) du gaz de séchage.

6. Dispositif selon l'une des revendications 1 à 5, caractérisé en ce qu'en aval de la conduite de sortie (30), il est prévu un post-brûleur (34) pour les substances combustibles qui se dégagent de la matière à sécher.

7. Dispositif selon l'une des revendications 1 à 6, caractérisé en ce que la chambre de séchage et éventuellement aussi l'enveloppe (14) sont divisées en tronçons (2a à 2c; 18a à 18c), la longueur des éléments de paroi en forme de coquille (6a à 6c; 14a à 14c) correspondant à la longueur des différents tronçons.

8. Dispositif selon la revendication 7, caractérisé en ce qu'entre les tronçons (2a à 2c) de la chambre de séchage, sont prévues des cloisons (12) qui présentent des passages pour la matière (4) en forme de bande et pour le gaz de séchage.

9. Dispositif selon l'une des revendications 1 à 8, caractérisé en ce qu'il est prévu dans la chambre de séchage des buses à haute pression (29) servant à introduire un courant de gaz de séchage additionnel à grande vitesse, et qui sont dirigées vers la matière en forme de bande (4) qu'il s'agit de sécher.

10. Dispositif selon la revendication 9, caractérisé en ce que les buses à haute pression (29) sont constituées par des buses à fente, la largeur de la fente correspondant à peu près à la largeur de la matière en forme de bande à sécher (4).

Fig. 1

Fig. 2